# EUROPÄISCHE PATENTSCHRIFT

(11) **EP 1 070 923 B1**
(45) Veröffentlichungstag und Bekanntmachung des Hinweises auf die Patenterteilung: **07.01.2004**
(21) Anmeldenummer: 00250239.1
(22) Anmeldetag: 14.07.2000
(51) Int. Cl.: F24J 2/52, H01L 31/042

(54) **Vorrichtung zur Befestigung von Solarmodulen**
Apparatus for mounting solar modules
Dispositif pour la fixation de modules solaires

(30) Priorität: 19.07.1999 DE 19934073
(43) Veröffentlichungstag der Anmeldung: 24.01.2001
(73) Patentinhaber: RegEn Energiesysteme GmbH, 15827 Dahlewitz (DE)
(72) Erfinder: Genschorek, Gido, 15827 Dahlewitz (DE)
(74) Vertreter: Kietzmann, Manfred

(56) Entgegenhaltungen:
- EP-A- 0 905 795
- WO-A-99/17063
- DE-A- 19 700 873
- DE-A- 19 934 059
- DE-U- 29 912 699
- PATENT ABSTRACTS OF JAPAN vol. 009, no. 183 (M-400), 30. Juli 1985 (1985-07-30) -& JP 60 050348 A (MATSUSHITA DENKO KK), 20. März 1985 (1985-03-20)

## Beschreibung

Die Erfindung betrifft eine Befestigung von Solarmodulen, die einen Profilrahmen aufweisen.

Die Befestigung von gerahmten Solarmodulen erfolgt bisher durch Verschraubung des Rahmens der Solarmodule mit Tragprofilen, bevorzugt C - Profilen, die auf Dächern oder anderen Flächen montiert sind. Eine derartige Lösung wird in der EP 0 905 795 A2 aufgezeigt. Der Rahmen des Solarmoduls wird in eine Ausnehmung eines Tragprofils eingelegt und durch eine zweiteilige Klammer, deren Teile verschraubt werden, festgeklemmt. Eine derartige Verbindung ist aufwendig bei der Montage durch die begrenzte Zugängigkeit der zu verschraubenden Stellen.

Aus der WO 99/17063 ist ein Bauelement zur Befestigung von Solarmodulen bekannt, das aus einem mit Zungen versehenen Hakenteil besteht. Es besitzt einen Quersteg, von dem aus sich senkrecht nach unten und oben Längsstege erstrecken, von deren Enden aus sich jeweils auf beiden Seiten federnde Zungen schräg nach außen in Richtung auf den Quersteg erstrecken. Die Länge der Längsstege und der Winkel der Zungen sind so ausgelegt, dass die Zungen beim Zusammenstecken der Profilschienen vom Rahmen und dem Auflageprofil in deren Ausnehmungen eingeführt und zusammengedrückt werden und dann in den Ausnehmungen auffedern und sich hinter Stegen der Ausnehmungen festspreizen. Der Quersteg ist in seiner Mitte zu einem rechteckigen Profil verdickt, dessen Breite etwa der Weite der Öffnungen der Ausnehmung entspricht, so dass diese im zusammengesteckten Zustand im wesentlichen von dem rechteckigen Profile ausgefüllt werden.

Aufgabe der Erfindung ist es, eine Befestigung der Solarmodule auf Trägerprofilen zu erreichen, die montagefreundlich und kostengünstig ist. Gelöst wird diese Aufgabe mit den Merkmalen des Anspruchs 1, vorteilhafte Ausgestaltungen sind Gegenstand der Unteransprüche.

Die erfindungsgemäße Vorrichtung zur Befestigung von Solarmodulen, sieht vor, dass zwischen dem Tragprofil und dem Rahmen des Solarmoduls mittels eines einteiligen Klemmstückes eine form- und kraftschlüssige Verbindung hergestellt wird. Dabei kann in Abhängigkeit von der Größe des Solarmoduls in bekannter Weise ein einteiliges Klemmstück oder mehrere einteilige Klemmstücke pro Seite des Rahmens des Solarmoduls eingesetzt werden.

Das einteilige Klemmstück im Sinne der Erfindung kann auch eine größere Länge aufweisen, so dass es als Klemmschiene zu bezeichnen wäre.

Die Verbindung zwischen dem Tragprofil und dem einteiligen Klemmstück wird erfindungsgemäß als eine kraftschlüssige und/oder eine formschlüssige Verbindung ausgebildet.
Bei einer kraftschlüssigen Verbindung erfolgt die Montage des oder der einteiligen Klemmstücke bevorzugt im Vorfeld der Montage des Solarmoduls. Es werden also vorgefertigte Tragprofile mit angeschweißten oder angeschraubten einteiligen Klemmstücken zur Baustelle geliefert.
Die formschlüssige Verbindung findet bevorzugt Anwendung, wenn die Tragprofile bereits montiert sind oder sie werden vor der Montage auf die Tragprofile aufgesteckt.

Die Verbindung zwischen dem Rahmen des Solarmoduls und dem einteiligen Klemmstück ist stets eine form- und kraftschlüssige Verbindung.

Die bekanntesten Rahmen von Solarmodulen weisen als Anschlussmöglichkeit C - Profile auf, wobei diese mit ihrer Öffnung entweder senkrecht zur Solarmodulebene oder in eine parallele Richtung zur Solarmodulebene weisen. Im ersten Fall sind die Schenkel des C - Profils gekröpft ausgeführt.
Ist Bestandteil des Rahmens des Solarmoduls ein mit seiner Öffnung in Richtung des Tragprofils weisendes C - Profil mit nach innen gekröpften Schenkeln, so wird in Ausgestaltung der Erfindung ein Tragprofil genutzt, das ein mit seiner Öffnung in Richtung auf den Rahmen des Solarmoduls weisendes C - Profil mit nach innen gekröpften Schenkeln ist und die C - Profile werden mit einem einteiligen Klemmstück verbunden, das mindestens einen Schenkel des C - Profils des Rahmens mit einem Schenkel des C - Profils des Tragprofils kraft- und formschlüssig verbindet.
Dies geschieht in einer bevorzugten Ausführung mittels einer am einteiligen Klemmstück angeordneten Rastnase, die kraft- und formschlüssig hinter eine Kröpfung des Schenkels des C - Profils des Rahmens greift und einem am einteiligen Klemmstück angeordneten Anschlag für das C - Profil des Rahmens, der ein seitliches Verschieben des C - Profils des Rahmens gegenüber dem Klemmstück in der Ebene des Querschnitts des C - Profils des Rahmens verhindert.

Ist Bestandteil des Rahmens des Solarmoduls ein C - Profil, das mit der Seitenfläche eines Schenkels in Richtung Tragprofil weist, so wird in Ausgestaltung der Erfindung ebenfalls ein Tragprofil genutzt, das ein mit seiner Öffnung in Richtung auf den Rahmen weisendes C - Profil mit nach innen gekröpften Schenkeln ist, wobei die C - Profile mit einem einteiligen Klemmstück verbunden sind, das mindestens einen Schenkel des C - Profils des Rahmens mit einem Schenkel des C - Profils des Tragprofils kraft- und formschlüssig verbindet.
Die Verbindung zwischen dem einteiligen Klemmstück und dem C - Profil des Rahmens besteht hier aus einer am einteiligen Klemmstück angeordneten Rastnase, die kraft- und formschlüssig auf die Innenseite des Schenkels einwirkt, und aus einem am einteiligen Klemmstück angeordneten Anschlag für das C - Profil des Rahmens, der ein seitliches Verschieben des C - Profils des Rahmens gegenüber dem Klemmstück in der Ebene des Querschnitts des C - Profils des Rahmens verhindert.
Die Verbindung zwischen dem einteiligen Klemmstück und dem Tragprofil besteht in beiden Fällen aus einem am einteiligen Klemmstück angeordneten abgewinkelten Teil, das formschlüssig hinter eine Kröpfung eines Schenkels des Tragprofils greift und einem am einteiligen Klemmstück angeordneten Anschlag für das Tragprofil, der ein seitliches Verschieben des Tragprofils gegenüber dem Klemmstück in der Ebene des Querschnitts des Tragprofils verhindert.

In der weiteren Ausgestaltung der Erfindung ist vorgesehen, dass sowohl für das Tragprofil als auch den Rahmen des Solarmoduls zwei Anschläge vorhanden sind, die ein seitliches Verschieben des Tragprofils bzw. des C - Profils der Rahmen gegenüber dem einteiligen Klemmstück in der Ebene des Querschnitts der Profile verhindern. Die Rastnase wird so von Kräften entlastet, die die Rastverbindung aufheben könnten.

In einer weiteren Ausbildung der Erfindung befindet sich in der Kehlung der Rastnase eine schräge Fläche oder in der Kehlung ist ein elastischer Kunststoffkörper angeordnet, wobei die Fläche und der Körper so bemessen sind, dass die Rastfunktion der Rastnase erhalten bleibt. Durch diese Ausbildung wird erreicht, dass kein Spiel zwischen der Rastnase und dem Rahmen auftreten kann, zwischen Rahmen und Rastnase also stets eine Spannung besteht.

Die Erfindung soll anhand der Zeichnungen erläutert werden. Es zeigen:
- Fig. 1: Klemmstückanordnung bei Montage mehrerer Solarmodule,
- Fig. 2: Klemmstück mit einem Anschlag für den Rahmen des Solarmoduls,
- Fig. 3: Klemmstück mit zwei Anschlägen für den Rahmen des Solarmoduls,
- Fig. 4: Klemmstückanordnung bei Montage mehrerer Solarmodule und
- Fig. 5: Klemmstück mit besonders ausgebildeter Rastnase.

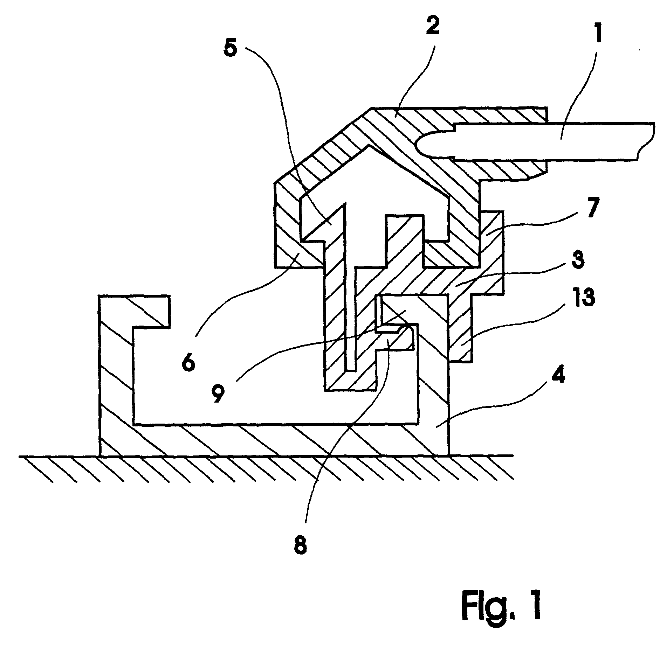

Die in **Fig. 1** dargestellte Klemmstückanordnung findet insbesondere bei der Montage mehrerer Solarmodule Anwendung. Bestandteil des Rahmens 2 des Solarmoduls 1 ist ein mit seiner Öffnung in Richtung des Tragprofils 4 weisendes C - Profil mit nach innen gekröpften Schenkeln. Das Tragprofil 4 ist ein mit seiner Öffnung in Richtung auf den Rahmen 2 des Solarmoduls 1 weisendes C - Profil mit nach innen gekröpften Schenkeln.
Die C - Profile werden mit einem einteiligen Klemmstück 3 kraft- und formschlüssig verbunden. Dazu weist das Klemmstück 3 eine Rastnase 5 auf, die kraft- und formschlüssig hinter eine Kröpfung 6 des Schenkels des C - Profils des Rahmens 2 greift.
Ein am Klemmstück 3 angeordneter Anschlag 7 für das C - Profil des Rahmens 2 des Solarmoduls 1 verhindert ein seitliches Verschieben des C - Profils des Rahmens 2 gegenüber dem Klemmstück 3 in der Ebene des Querschnitts des C - Profils des Rahmens 2.

Die Verbindung zwischen dem Klemmstück 3 und dem Tragprofil 4 besteht aus einem am Klemmstück 3 angeordneten abgewinkelten Teil 8, das formschlüssig hinter eine Kröpfung eines Schenkels 9 des Tragprofils 4 greift und einem am Klemmstück 3 angeordneten Anschlag 13 für das Tragprofil 4, der ein seitliches Verschieben des Tragprofils 4 gegenüber dem Klemmstück 3 in der Ebene des Querschnitts des Tragprofils 4 verhindert.

Das Tragprofil 4 und das Klemmstück 2 sind so aufeinander abgestimmt sind, dass die äußere Kante des Rahmens 2 die Mitte des Tragprofils 4 nach erfolgter Montage nicht überschreitet. So kann das Tragprofil 4 für einen weiteren, links anzuordnenden Solarmodule genutzt werden.

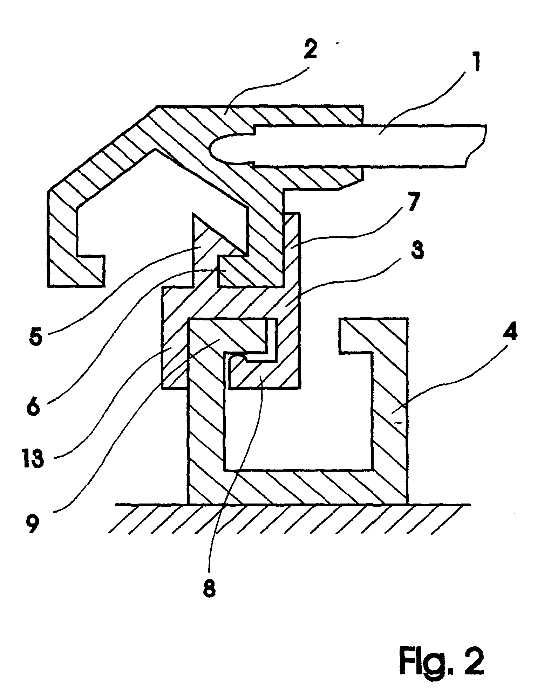

**Fig. 2** zeigt eine Klemmstückanordnung ebenfalls mit nur einem Anschlag 7 für den Rahmen 2 des Solarmoduls 1, wie sie bevorzugt am Ende der Anordnung mehrerer Solarmodule 1 genutzt wird. Der Rahmen 2 des Solarmoduls 1 deckt hier das Tragprofil 4 vollständig ab.

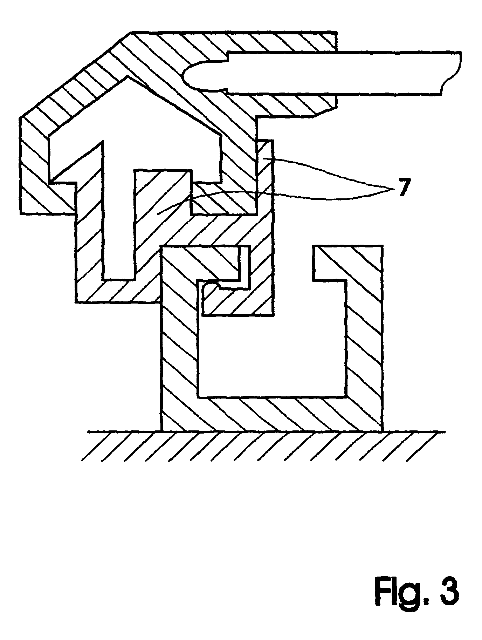

**Fig. 3** zeigt ein einteiliges Klemmstück 3 mit zwei Anschlägen 7 für den Rahmen 2 des Solarmoduls 1, die ein seitliches Verschieben des C - Profils des Rahmens 2 gegenüber dem Klemmstück 3 in der Ebene des Querschnitts des Profile verhindern. Die Rastnase 5 wird so von seitlich wirkenden Kräften entlastet, die die Rastverbindung aufheben könnten.

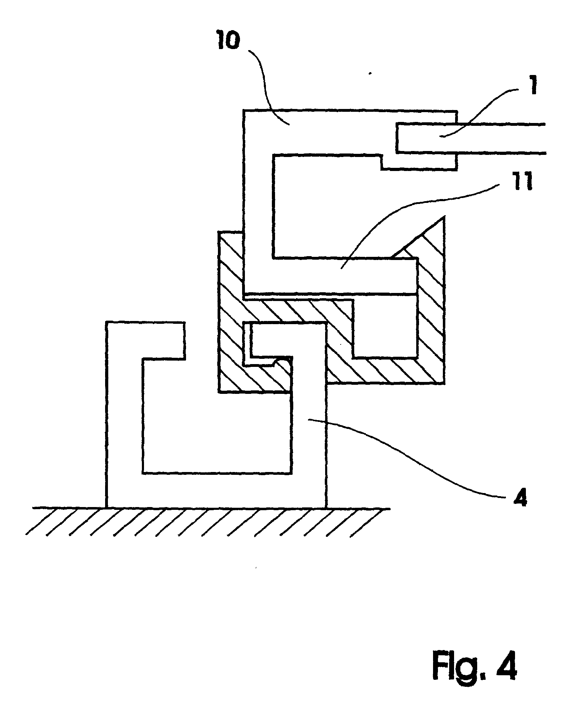

**Fig. 4** zeigt eine Klemmstückanordnung bei Montage mehrerer Solarmodule 1, wobei der Rahmens 10 des Solarmoduls 1 ein C - Profil ist, das mit der Seitenfläche eines Schenkels 11 in Richtung Tragprofil 4 weist.
Die Verbindung zwischen dem einteiligen Klemmstück 3 und dem C - Profil des Rahmens 10 besteht hier aus einer am Klemmstück 3 angeordneten Rastnase 5, die kraft- und formschlüssig auf die Innenseite des Schenkels 11 einwirkt, und aus einem am Klemmstück 3 angeordneten Anschlag 7 für das C - Profil des Rahmens 10, der ein seitliches Verschieben des C - Profils des Rahmens 10 gegenüber dem Klemmstück 3 in der Ebene des Querschnitts des C - Profils des Rahmens 10 verhindert.

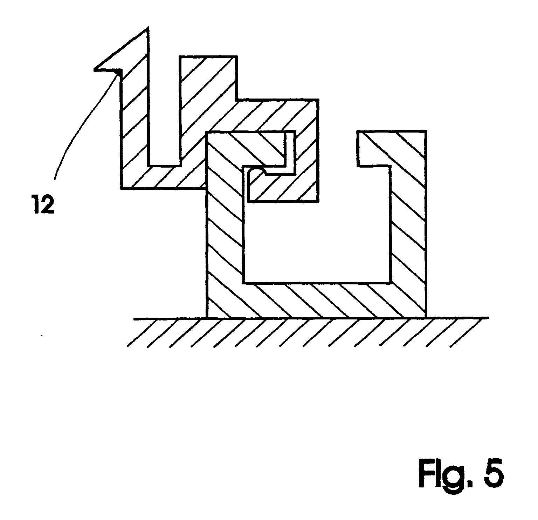

In **Fig. 5** ist gezeigt, dass in der Kehlung 12 der Rastnase 5 eine schräge Fläche oder ein elastischer Kunststoffkörper angeordnet ist, wobei die Fläche und der Körper so bemessen sind, dass die Rastfunktion der Rastnase 5 erhalten bleibt. Durch diese Ausbildung wird erreicht, dass zwischen den Rahmen 2, 10 und der Rastnase 5 stets eine Spannung besteht.

### Bezugszeichenliste

- 1: Solarmodul
- 2: Rahmen des Solarmoduls
- 3: einteiliges Klemmstück
- 4: Tragprofil
- 5: Rastnase
- 6: Kröpfung
- 7: Anschlag
- 8: abgewinkeltes Teil
- 9: Kröpfung
- 10: Rahmen des Solarmoduls
- 11: Schenkel
- 12: Kehlung mit Kunststoffkörper
- 13: Anschlag

## Patentansprüche

1. Vorrichtung zur Befestigung von Solarmodulen (1), bei der zwischen dem Tragprofil (4) und dem Rahmen (2, 10) des Solarmoduls (1) mittels eines einteiligen Klemmstückes (3) eine Verbindung hergestellt ist, wobei die Verbindung zwischen dem Trageprofil (4) und dem Klemmstück (3) eine kraftschlüssige und/oder eine formschlüssige ist und die Verbindung zwischen den Rahmen (2, 10) des Solarmoduls (1) und dem Klemmstück (3) eine form- und kraftschlüssige ist.

2. Vorrichtung nach Anspruch 1, **dadurch gekennzeichnet, dass**
Bestandteil des Rahmens (2) des Solarmoduls (1) ein mit seiner Öffnung in Richtung des Tragprofils (4) weisendes C - Profil mit nach innen gekröpften Schenkeln ist, das Tragprofil (4) ein mit seiner Öffnung in Richtung auf den Rahmen (2) weisendes C - Profil mit nach innen gekröpften Schenkeln ist und die C - Profile mit einem einteiligen Klemmstück (3) verbunden sind, das mindestens einen Schenkel des C - Profils des Rahmens (2) mit einem Schenkel des C - Profils des Tragprofils (4) kraft- und formschlüssig verbindet.

3. Vorrichtung nach Anspruch 2, **dadurch gekennzeichnet, dass**
die Verbindung zwischen dem einteiligen Klemmstück (3) und dem C - Profil des Rahmens (2) aus einer am Klemmstück (3) angeordneten Rastnase (5), die kraft- und formschlüssig hinter eine Kröpfung (6) des Schenkels des C - Profils des Rahmens (2) greift, besteht und aus einem Anschlag (7) für das C - Profil des Rahmens (2), der ein seitliches Verschieben des C - Profils des Rahmens (2) gegenüber dem Klemmstück (3) in der Ebene des Querschnitts des C - Profils des Rahmens (2) verhindert.

4. Vorrichtung nach Anspruch 1, **dadurch gekennzeichnet, dass**
Bestandteil des Rahmens (10) des Solarmoduls (1) ein C - Profil ist, das mit der Seitenfläche eines Schenkels (11) in Richtung Tragprofil (4) weist, das Tragprofil (4) ein mit seiner Öffnung in Richtung auf den Rahmen (10) weisendes C - Profil mit nach innen gekröpften Schenkeln ist und die C - Profile mit einem einteiligen Klemmstück (3) verbunden sind, das mindestens einen Schenkel des C - Profils des Rahmens (10) mit einem Schenkel des C - Profils des Tragprofils (4) kraft- und formschlüssig verbindet.

5. Vorrichtung nach Anspruch 4, **dadurch gekennzeichnet, dass**
die Verbindung zwischen dem einteiligen Klemmstück (3) und dem C - Profil des Rahmens (10) aus einer am Klemmstück (3) angeordneten Rastnase (5), die kraft- und formschlüssig auf die Innenseite des Schenkels (11) einwirkt, besteht und aus einem Anschlag (7) für das C - Profil des Rahmens (10), der ein seitliches Verschieben des C - Profils des Rahmens (10) gegenüber dem Klemmstück (3) in der Ebene des Querschnitts des C - Profils des Rahmens (10) verhindert.

6. Vorrichtung nach Anspruch 2 oder 4, **dadurch gekennzeichnet, dass**
die Verbindung zwischen dem einteiligen Klemmstück (3) und dem Tragprofil (4) aus einem am Klemmstück (3) angeordneten abgewinkelten Teil (8) besteht, das formschlüssig hinter eine Kröpfung eines Schenkels (9) des Tragprofils (4) greift und ein Anschlag (13) für das Tragprofil (4) vorhanden ist, der ein seitliches Verschieben des Tragprofils (4) gegenüber dem Klemmstück (3) in der Ebene des Querschnitts des Tragprofils (4) verhindert.

7. Vorrichtung nach Anspruch 2, 4 oder 6, **dadurch gekennzeichnet, dass**
zwei Anschläge (7) und/ oder (13) vorhanden sind, die ein seitliches Verschieben des Tragprofils (4) bzw. des C - Profils der Rahmen (2, 10) gegenüber dem einteiligen Klemmstück (3) in der Ebene des Querschnitts der Profile verhindern.

8. Vorrichtung nach Anspruch 3 oder 5, **dadurch gekennzeichnet, dass**
die Kehlung (12) der Rastnase (5) eine schräge Fläche aufweist oder in der Kehlung (12) ein elastischer Kunststoffkörper angeordnet ist, wobei die Fläche und der Körper so bemessen sind, dass die Rastfunktion der Rastnase (5) erhalten bleibt.

## Claims

1. Apparatus for fastening solar modules (1), with which apparatus a connection is established between the support profile (4) and the frame (2, 10) of the solar module (1) by means of a one-part clamping piece (3), wherein the connection between the support profile (4) and the clamping piece (3) is a non-positive and/or a positive connection and the connection between the frames (2, 10) of the solar module (1) and the clamping piece (3) is a positive and non-positive connection.

2. Apparatus according to claim 1, **characterized in that**
a component part of the frame (2) of the solar module (1) is a C-profile having its opening directed towards the support profile (4) and having limbs bent in at right angles, the support profile (4) is a C-profile having its opening directed towards the frame (2) and having limbs bent in at right angles and the C-profiles are connected to a one-part clamping piece (3), which non-positively and positively connects at least one limb of the C-profile of the frame (2) to one limb of the C-profile of the support profile (4).

3. Apparatus according to claim 2, **characterized in that**
the connection between the one-part clamping piece (3) and the C-profile of the frame (2) comprises a detent lug (5), which is disposed on the clamping piece (3) and engages non-positively and positively behind a right-angle bend (6) of the limb of the C-profile of the frame (2), and a stop (7) for the C-profile of the frame (2) that prevents lateral displacement of the C-profile of the frame (2) relative to the clamping piece (3) in the plane of the cross section of the C-profile of the frame (2) .

4. Apparatus according to claim 1, **characterized in that** a component part of the frame (10) of the solar module (1) is a C-profile, which has the lateral surface of one limb (11) directed towards the support profile (4), the support profile (4) is a C-profile having its opening directed towards the frame (10) and having limbs bent in at right angles and the C-profiles are connected to a one-part clamping piece (3), which non-positively and positively connects at least one limb of the C-profile of the frame (10) to one limb of the C-profile of the support profile (4).

5. Apparatus according to claim 4, **characterized in that**
the connection between the one-part clamping piece (3) and the C-profile of the frame (10) comprises a detent lug (5), which is disposed on the clamping piece (3) and acts non-positively and positively upon the inner side of the limb (11), and a stop (7) for the C-profile of the frame (10) that prevents lateral displacement of the C-profile of the frame (10) relative to the clamping piece (3) in the plane of the cross section of the C-profile of the frame (10).

6. Apparatus according to claim 2 or 4, **characterized in that**
the connection between the one-part clamping piece (3) and the support profile (4) comprises an angular part (8), which is disposed on the clamping piece (3)-and engages positively behind a right-angle bend of one limb (9) of the support profile (4) and a stop (13) for the support profile (4) is provided, which prevents lateral displacement of the support profile (4) relative to the clamping piece (3) in the plane of the cross section of the support profile (4).

7. Apparatus according to claim 2, 4 or 6, **characterized in that**
two stops (7) and/or (13) are provided, which prevent lateral displacement of the support profile (4) and/or of the C-profile of the frames (2, 10) relative to the one-part clamping piece (3) in the plane of the cross section of the profiles.

8. Apparatus according to claim 3 or 5, **characterized in that**
the throating (12) of the detent lug (5) comprises an oblique surface or in the throating (12) a resilient plastic body is disposed, wherein the surface and the body are so dimensioned that the detent function of the detent lug (5) is maintained.

## Revendications

1. Dispositif de fixation de modules solaires (1) avec lequel une liaison est réalisée entre le profilé support (4) et le cadre (2, 10) du module solaire (1) au moins d'une pièce monobloc de calage (3), la liaison entre le profilé support (4) et la pièce de calage (3) étant une liaison par serrage et/ou par emboîtement et la liaison entre les cadres (2, 10) du module solaire (1) et la pièce de calage (3) étant une liaison par emboîtement et serrage.

2. Dispositif selon la revendication 1, **caractérisé par le fait que** le cadre (2) du module solaire (1) comprend un profilé en C dont l'ouverture est orientée en direction du profilé support (4) et qui a des ailes coudées vers l'intérieur, le profilé support (4) est un profilé en C dont l'ouverture est orientée en direction du cadre (2) et qui a des ailes coudées vers l'intérieur, et les profilés en C sont joints à une pièce monobloc de calage (3) qui relie par serrage et emboîtement au moins une aile du profilé en C du cadre (2) à une aile du profilé en C du profilé support (4).

3. Dispositif selon la revendication 2, **caractérisé par le fait que** la liaison entre la pièce monobloc de calage (3) et le profilé en C du cadre (2) est constituée d'une saillie d'encliquetage (5) située sur la pièce de calage (3) qui s'applique avec serrage et emboîtement derrière un coude (6) de l'aile du profilé en C du cadre (2), et d'une butée (7) pour le profilé en C du cadre (2) qui empêche un déplacement latéral du profilé en C du cadre (2) par rapport à la pièce de calage (3) dans le plan de la section du profilé en C du cadre (2).

4. Dispositif selon la revendication 1, **caractérisé par le fait que** le cadre (10) du module solaire (1) comprend un profilé en C dont la surface latérale d'une aile (11) est orientée en direction du profilé support (4), le profilé support (4) est un profilé en C dont l'ouverture est orientée en direction du cadre (10) et qui a des ailes coudées vers l'intérieur, et le profilés en C sont joints à une pièce monobloc de calage (2) qui relie par serrage et emboîtement au moins une aile du profilé en C du cadre (10) à une aile du profilé en C du profilé support (4).

5. Dispositif selon la revendication 4, **caractérisé par le fait que** la liaison entre la pièce monobloc de calage (3) et le profilé en C du cadre (10) est constituée d'une saillie d'encliquetage (5) située sur la pièce de calage (3) qui agit par serrage et emboîtement sur le côté intérieur de l'aile (11), et d'une butée (7) pour le profilé en C du cadre (10) qui empêche un déplacement latéral du profilé en C du cadre (10) par rapport à la pièce de calage (3) dans le plan de la section du profilé en C du cadre (10).

6. Dispositif selon l'une des revendications 2 et 4, **caractérisé par le fait que** la liaison entre la pièce monobloc de calage (3) et le profilé support (4) est constituée d'une partie coudée (8) située sur la pièce de calage (3) qui s'applique par emboîtement derrière un coude d'une aile (9) du profilé support (4), et il existe pour le profilé support (4) une butée (13) qui empêche un déplacement latéral du profilé support (4) par rapport à la pièce de calage (3) dans le plan de la section du profilé support (4).

7. Dispositif selon l'une des revendications 2, 4 et 6, **caractérisé par le fait qu'**il existe deux butées (7) et/ou (13) qui empêchent un déplacement latéral du profilé support (4) ou du profilé en C des cadres (2, 10) par rapport à la pièce monobloc de calage (3) dans le plan de la section des profilés.

8. Dispositif selon l'une des revendications 3 et 5, **caractérisé par le fait que** la gorge (12) de la saillie d'encliquetage (5) présente une surface oblique ou dans la gorge (12) est placé un corps élastique en matière plastique, la surface et le corps étant dimensionnés de façon que la fonction d'encliquetage de la saillie d'encliquetage (5) subsiste.
